# FASCICULE DE BREVET EUROPEEN

(11) **EP 0 313 514 B1**
(45) Date de publication et mention de la délivrance du brevet: **10.03.1993**
(21) Numéro de dépôt: 88810648.1
(22) Date de dépôt: 22.09.1988
(51) Int. Cl.: H02K 1/12, H02K 3/46

(54) **Procédé de fabrication d'un stator sans rainures pour moteur électrique et moteur électrique comprenant un stator fabriqué selon le procédé**
Verfahren zur Herstellung eines nutenlosen Ständers für einen elektrischen Motor und elektrischer Motor mit einem solchen Ständer
Manufacturing method of a non-slotted stator for an electric motor and electric motor fitted with such a stator

(30) Priorité: 21.10.1987 CH 4116/87
(43) Date de publication de la demande: 26.04.1989
(73) Titulaire: Mavilor Systèmes S.A., CH-1700 Fribourg (CH)
(72) Inventeur: Tassinario, Giampiero, I-50040 Settimello/Firenze (IT)
(74) Mandataire: Jörchel, Dietrich R.A.

(56) Documents cités:
- DE-A- 3 005 222
- FR-A- 2 243 512
- US-A- 3 848 331
- PATENT ABSTRACTS OF JAPAN, vol. 8, no. 74 (E-236)[1511], 6 avril 1984, page 121 E 236; & JP-A-58 222 745
- PATENT ABSTRACTS OF JAPAN, vol. 10, no. 82 (E-392)[2139], 2. avril 1986, page 46 E 392; & JP-A-60 226 750
- PATENT ABSTRACTS OF JAPAN, vol. 8, no. 36 (E-227)[1473], 16 février 1984, page 131 E 227; & JP-A-58 195 439 (SHIBAURA SEISAKUSHO K.K.) 14-11-1983
- PATENT ABSTRACTS OF JAPAN, vol. 7, no. 178 (E-191)[1323], 6 août 1983, page 78 E 191; & JP-A-58 83 542 (SHIBAURA SEISAKUSHO K.K.) 19-05-1983

## Description

La présente invention concerne un procédé de fabrication d'un stator sans rainures pour moteur électrique ainsi que le moteur électrique comprenant un stator fabriqué selon le procédé et plus particulièrement un moteur dont le rotor est muni d'aimants permanents.

Habituellement le stator et notamment la culasse d'un moteur électrique, dont le rotor est muni d'aimants permanents, porte des rainures à l'intérieur desquelles prend place un bobinage en cuivre. De cette manière l'entrefer magnétique du moteur est relativement petit ce qui permet une perméance magnétique élevée. Néanmoins, la densité du flux magnétique est limitée par la saturation du fer aux bords des dents délimitant les rainures. L'augmentation de la largeur des dents permet d'augmenter la densité du flux magnétique mais ceci au détriment des dimensions des rainures donc de la quantité du cuivre (bobinage). La densité du flux magnétique est ainsi limitée par la compromis imposé entre la largeur des dents et les dimensions des rainures qui doivent contenir un maximum de cuivre. L'arrivée sur le marché des aimants permanents à haute énergie a permis la réalisation des stators sans rainures. Le bobinage ayant une forme cylindrique est disposé dans l'entrefer magnétique, qui bien sûr, est de ce fait plus grand que celui d'un moteur ayant une culasse à rainures. L'épaisseur radiale du bobinage est inférieure à celle qu'il aurait dans une culasse à rainures pour la même quantité de cuivre car le bobinage peut occuper tout l'espace cylindrique entre la culasse et le rotor. Par ailleurs, l'augmentation de l'entrefer magnétique est compensée par la disparition des problèmes de saturation aux extrémités des dents, le flux magnétique étant constant dans toute l'étendue de l'entrefer magnétique et on peut utiliser des densités magnétiques supérieures à celles utilisées habituellement. L'élimination des culasses avec rainures a permis d'éliminer l'effet Cogging (variation du flux magnétique dans l'entrefer due à la présence des rainures), de diminuer le coût de fabrication, de diminuer les pertes de la matière et de simplifier le montage de la culasse ainsi que du bobinage. Selon un des procédés habituels, on prépare le bobinage cylindrique sur un support cylindrique, on prépare la culasse, par exemple avec des anneaux de fer entourés d'une douille d'aluminium, on introduit le bobinage dans la culasse et on injecte une résine synthétique pour fixer le bobinage sur la culasse. Souvent, comme par ailleurs décrit dans le brevet US-A-4 679 313, le bobinage est monté sur un support cylindrique isolant, par exemple du verre, qui reste dans la culasse avec le bobinage ce qui augmente inutilement l'entrefer magnétique. Selon la construction du bobinage les retours des spires, aux bords d'extrémités périphériques du bobinage, posent certains problèmes, par exemple, lors de l'introduction du bobinage dans la culasse, et dans le US-A-4 679 313 on prévoit des dé-crochements circulaires de la surface intérieure de la culasse pour les loger et rendre possible la mise en place du rotor. Pour l'introduction du bobinage dans la culasse et avant l'injection de la résine on a prévu un support cylindrique dont l'extrémité antérieure présente une portée conique permettant d'y rabattre les retours de bobines lors de l'introduction dans la culasse avant de les redresser et les loger dans le décrochement circulaire de la culasse. En cas de défectuosité de bobinage son remplacement est quasi impossible car la carcasse en aluminium, la culasse et le bobinage forment une seule pièce, la résine ayant solidarisé le bobinage dans la culasse.

Un procédé tel que décrit dans le préambule de la revendication 1 est connu du FR-A-2243512. Selon ce procédé les épaulements du bobinage ne sont inclinés vers l'extérieur que d'un petit angle aigu. La pièce cylindrique qui est placée au centre du bobinage dans le moule pour déterminer l'entrefer et l'espace du rotor requis a un diamètre supérieur au diamètre intérieur du bobinage. On continue en tassant autour des tours du bobinage une certaine quantité de matière composée de particules magnétiques et, si on le désire, on peut appliquer un liant à ces particules. Autour de ce noyau est bobinée sur chant une bande de matière magnétique formant la culasse. Le stator obtenu de cette manière comporte de la matière moulée dépassant largement le bobinage, et la culasse se trouve en dehors de l'espace limité par ce bobinage.

Des moteurs fabriqués par des procédés similaires sont connus des JP-A-58-222745 et JP-A-60-226750. Dans chaque cas les épaulements du bobinage ne sont rabattus que d'un petit angle aigu. En outre, selon la première publication, les deux épaulements sont inclinés vers l'extérieur et la culasse consiste en un fil magnétique enroulé autour du bobinage dans un espace qui dépasse radialement, dans une large mesure, lesdits épaulements. On interpose ensuite entre les spires du fil magnétique de la poudre magnétique moulée avec une résine pour former un cadre qui, lui-même, dépasse largement la surface extérieure de la culasse. Selon la deuxième publication, l'un desdits épaulements est incliné vers l'extérieur, l'autre vers l'intérieur, et de nouveau la culasse dépasse dans le sens radial l'épaulement extérieur du bobinage.

La présente invention propose un procédé de fabrication de stator sans rainures permettant de pallier les inconvénients susmentionnés et notamment rendre plus facile et plus économique la fabrication de stator sans rainures.

Le procédé selon l'invention est caractérisé par la clause caractérisante de la revendication 1.

Les avantages de ce procédé sont les suivants: on forme avec le bobinage une pièce rigide, une sorte de cartouche compacte, qui ne dépasse pratiquement pas les dimensions du bobinage et qui peut supporter certains efforts mécaniques notamment l'assemblage de la culasse directement sur cette cartouche. Les retours des spires aux extrémités périphériques du bobinage forment des épaulements dont, suivant le cas, l'un au moins a une fonction mécanique précise comme il sera expliqué par la suite. Si une défectuosité du bobinage survient, on peut facilement retirer de la carcasse la pièce formée du bobinage et de la culasse et la remplacer, la carcasse extérieure du moteur étant souvent en aluminium munie sur la surface extérieure d'ailettes de refroidissement. Dans les constructions conventionnelles la carcasse des moteurs est solidaire de la culasse et elles ne peuvent pas être séparées facilement.

Une variante préférée du procédé est définie à la revendication 2.

Les avantages de cette variante sont les suivants: en rabattant les retours des spires vers l'extérieur on obtient deux épaulements extérieurs qui permettent de bobiner le fil en matériau magnétique formant la culasse du stator, sans avoir besoin d'un moule ou d'un autre moyen mécanique pour tenir les bords périphériques de la bobine créée par l'enroulement du fil en matériau magnétique. L'avantage de l'utilisation du fil pour former la culasse est que l'on évite les pertes par courants de Foucault. Cette construction est particulièrement économique et facile à faire car elle évite la fabrication préalable de la culasse du stator, (usinage, découpage, assemblage etc.). Le fait que le bobinage est noyé dans de la résine en plus de l'agent isolant entourant le fil de cuivre utilisé pour le bobinage, fait de ce bobinage un support rigide se prêtant bien à un enroulement direct du fil sur celui-ci, et assure que la culasse ne risque pas d'entrer en contact intempestif avec une spire du bobinage suite à un affaiblissement de la couche isolante et provoquer des courts-circuits.

Pour limiter le bruit de la culasse et le rendre plus compact, on peut enduire la pièce ainsi obtenue avec une résine synthétique obtenant du même coup une pièce rigide.

Une autre variante d'exécution de l'invention est définie par la revendication 5.

Les avantages de cette variante sont les suivants : L'épaulement extérieur du bobinage rigide sert d'arrêt lors du montage des anneaux de matière magnétique avant leur assemblage par application d'une résine synthétique, la facilité de fabrication qui rend la construction du stator économique, la possibilité comme vu précédemment de remplacer la pièce formée du bobinage et de la culasse en cas de défectuosité.

L'invention concerne également des moteurs électriques dont le stator est fabriqué par la mise en application du procédé selon les revendications 2 ou 3 et ces moteurs sont revendiqués, respectivement dans les revendications 4 et 5.

L'invention sera décrite plus en détail à l'aide du dessin annexé.

La figure 1 est une vue schématique de côté d'un bobinage cylindrique.

La figure 2 est une vue en coupe du bobinage de la figure 1 à l'intérieur de moule.

La figure 3 est une vue en coupe du stator obtenu après enroulement du fil autour du bobinage rigide.

La figure 4 est une vue schématique de côté d'un deuxième bobinage.

La figure 5 est une vue en coupe du bobinage de la figure 4 à l'intérieur de moule.

La figure 6 est une vue en coupe du stator obtenu après avoir enfilé les anneaux sur le bobinage rigide.

La figure 7 est une vue en coupe du stator monté dans une carcasse.

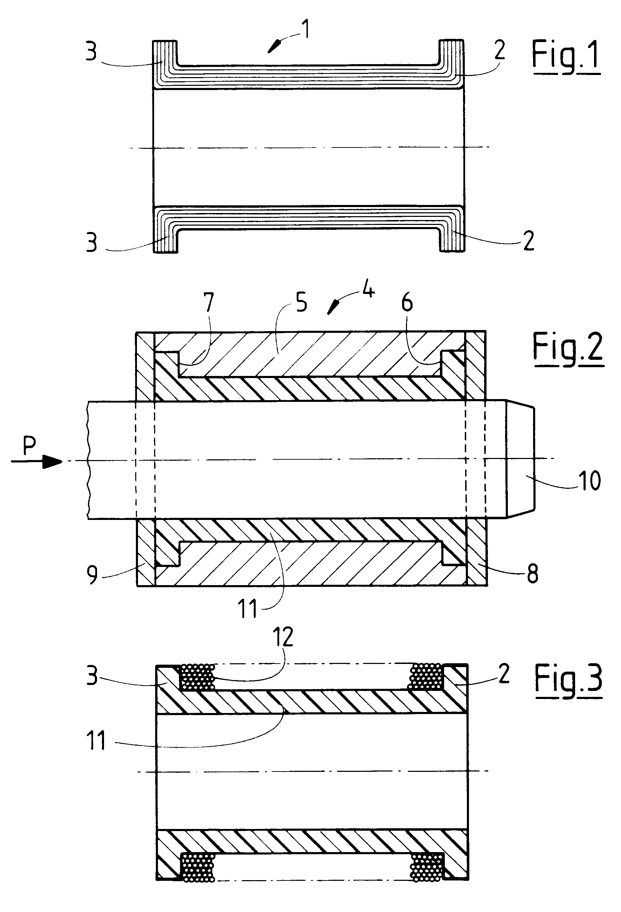

A la figure 1 on a représenté un bobinage cylindrique 1 dont les spires s'étendent axialement et dont on a rabattu les retours des spires 2, 3 aux bords des extrémités périphériques du bobinage dans des plans perpendiculaires à l'axe du bobinage contenant les bords circulaires du bobinage et vers l'extérieur formant ainsi des épaulements extérieurs 2, 3. Ce bobinage 1 est formé sur un support cylindrique (non représenté) de façon conventionnelle. Par la suite, on introduit le bobinage dans un moule 4 comprenant une partie cylindrique divisée en deux coquilles munies des épaulements 6, 7 conjugués, respectivement, aux épaulements 2, 3 du bobinage 1 et deux anneaux 8, 9 fermant de part et d'autre le moule 4 et laissant le passage pour une pièce cylindrique 10 exerçant une pression P sur le bobinage 1 pour l'appliquer contre le moule 4.

Après avoir mis en place le bobinage 1 dans le moule 4 on injecte une résine synthétique à haute température, on laisse refroidir et on retire la pièce 10 et on démoule à la presse. On obtient ainsi une pièce rigide 11 formée par le bobinage 1 et la résine dans laquelle il est englobé. Bien sûr les extrémités du conducteur pour les connexions des bobines avec des dispositifs de commande (commutation électronique etc.) sont laissées à l'extérieur du bobinage rigide 11 pour effectuer par la suite les connexions avec les dispositifs correspondants.

Par la suite on enroule directement autour de la pièce rigide 11 un fil 12 en matériau magnétique, par exemple du fer pour former la culasse du stator. Le fil 12 est enroulé sans aucune difficulté, d'une part, car les épaulements 2, 3 du bobinage servent de guides latéraux, d'autre part la résistance mécanique de la pièce 11 est suffisante pour supporter sans aucune autre aide extérieure la culasse ainsi formée. Après terminé l'enroulement du fil 12 qui est un fil de fer que l'on trouve facilement dans le commerce d'un diamètre, par exemple, de 0,30 mm, on enduit de préférence la culasse d'une résine rendant la culasse solidaire du bobinage et évitant le bruit. Le fil de fer peut, avant d'être enroulé autour du bobinage, être enduit d'un agent isolant afin de diminuer les courants de Foucault. Néanmoins des essais ont prouvé que même si l'on n'isole pas le fil le contact entre les spires du fil se fait sur une petite surface et les courants de Foucault sont négligeables.

L'intérêt de ce stator mis à part la simplicité du procédé de fabrication est le coût bas des éléments constitutifs, et l'absence des pertes par courants de Foucault.

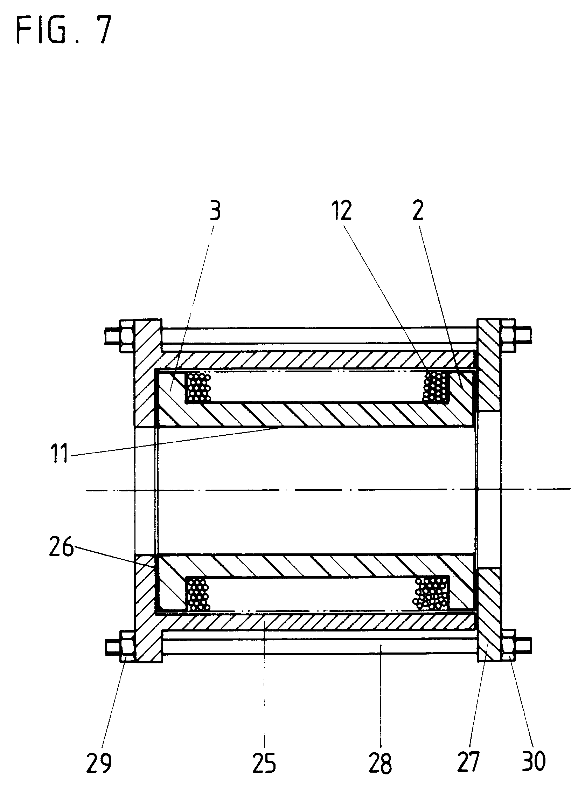

Le stator ainsi obtenu est par la suite utilisé pour le montage d'un moteur en y joignant par exemple un rotor à aimants permanents et en le montant dans une carcasse de préférence en aluminium. La pièce rigide ainsi obtenue est introduite dans une carcasse 25 (fig. 7) en aluminium munie d'aillettes de refroidissement présentant un épaulement intérieur 26 contre lequel vient s'appuyer une extrémité de cette pièce tandis que contre la seconde extrémité on applique un anneau 27 que l'on assemble à la carcasse 25 par des tiges filetées 28 et des écrous 29, 30 qui permettent de serrer l'anneau 27 contre le stator.

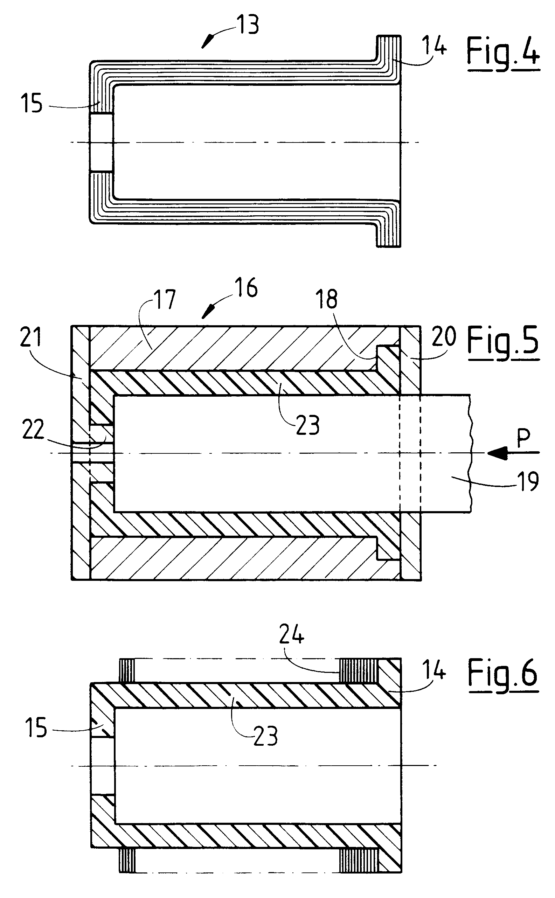

Conformément à une autre variante du procédé (figures 4 à 6), le bobinage 13 est formé comme précédemment sauf que cette fois les retours des spires aux bords des extrémités périphériques du bobinage, sont à une des extrémités rabattus vers l'extérieur formant un épaulement extérieur 14 tandis qu'à l'autre sont rabattus vers l'intérieur formant un épaulement intérieur 15.

Après avoir formé ce bobinage 13 on l'introduit dans un moule 16 comprenant une partie cylindrique 17 formée de deux coquilles semi-cylindriques avec un épaulement 18 conjugué à l'épaulement extérieur 14 du bobinage 13, une pièce cylindrique de pression 19, un anneau 20 fermant le moule 16 du côté de l'épaulement extérieur et une pièce 21 avec une portée cylindrique 22 pour entourer entre elle et la pièce de pression 19 l'épaulement intérieur 15 du bobinage 13. Après la mise en place du bobinage 13, on injecte une résine à haute température à l'intérieur du moule 16.

Après refroidissement on retire la pièce de pression 19 et on démoule à la presse obtenant ainsi une pièce rigide 23 comprenant le bobinage 13 englobé dans la résine. On forme par la suite la culasse du stator en enfilant sur la pièce 23 du côté de l'épaulement intérieur des anneaux 24 isolés en matériau magnétique. L'épaulement 14 sert de butée de fin de course et après avoir complété la culasse on assemble les anneaux 24 en appliquant une résine synthétique. Le montage du stator dans la carcasse est fait comme précédemment.

L'intérêt des stators selon l'invention mis à part leur simplicité de construction et le coût bas c'est qu'en cas de défectuosité du bobinage on peut enlever la pièce formée du bobinage noyé dans la résine 11, respectivement 23 et la culasse 12, respectivement 24 et la remplacer par une autre sans avoir à reconstruire la carcasse.

Le stator ainsi obtenu sert à l'assemblage d'un moteur dont, par exemple, le rotor est à aimants permanents.

## Revendications

1. Procédé de fabrication d'un stator sans rainures pour moteur électrique, comprenant essentiellement un bobinage cylindrique (1; 13) et une culasse (12; 24) en matériau magnétique entourant le bobinage (1; 13), en effectuant les étapes suivantes :
- on forme le bobinage cylindrique (1; 13) par des moyens connus;
- on rabat les retours des spires situés aux bords des extrémités périphériques du bobinage (1;13) formant ainsi des épaulements (2, 3; 14, 15), au moins l'un (2, 3; 14) de ces épaulements est rabattu vers l'extérieur;
- on place une pièce cylindrique (10; 19) au centre du bobinage (1; 13);
- on introduit le bobinage (1; 13) dans un moule (4; 16) approprié et on le remplit de matière à mouler;
- on retire après refroidissement la pièce cylindrique (10; 19) et le moule (4; 16) obtenant un bobinage rigide (11; 23), et on monte et assure autour du bobinage la culasse (12, 24) en matériau magnétique, caractérisé en ce que :
a) on rabat lesdits bords des extrémités périphériques du bobinage (1; 13) dans les plans contenant les extrémités circulaires du bobinage tel qu'on obtient des épaulements (2, 3; 14, 15) dirigés perpendiculairement à l'axe du bobinage;
b) on utilise un moule (4; 16) comprenant une partie cylindrique (5; 17), munie au moins d'un épaulement (6, 7; 18) conjugué audit épaulement (2,3; 14) extérieur du bobinage (1; 13);
c) on choisit une pièce cylindrique (10; 19) d'un diamètre adapté au diamètre interne du bobinage (1; 13), cette pièce cylindrique excerçant une pression sur ledit bobinage (1; 13) pour l'appliquer contre le moule (4; 16);
d) on utilise comme matière à mouler une résine synthétique qui est injectée;
e) on monte ladite culasse (12, 24) dans l'espace à côté dudit épaulement (2, 3; 14) rabattu vers l'extérieur tel que son diamètre extérieur est égal au diamètre extérieur dudit épaulement;
f) on fixe la pièce ainsi obtenue dans la carcasse (25) du moteur.

2. Procédé selon la revendication 1, caractérisé en ce que
- l'on rabat les retours des spires aux bords de deux extrémités périphériques du bobinage (1) vers l'extérieur formant ainsi deux épaulements extérieurs (2,3),
- l'on forme la culasse (12) en enroulant autour de la surface cylindrique du bobinage rigide (11) et entre les épaulements (2,3) un fil de matériau magnétique, de sorte qu'il remplisse partiellement ou complètement l'espace entre les deux épaulements (2,3)

3. Procédé selon la revendication 2, caractérisé par le fait que
- l'on enduit la pièce (11,12) ainsi obtenue d'une résine synthétique.

4. Procédé selon l'une des revendications 2 ou 3, caractérisé par le fait que l'on enduit le fil (12) de matériau magnétique d'un agent isolant avant de l'enrouler autour du bobinage.

5. Procédé selon la revendication 1, caractérisé en ce que
- l'on rabat les retours des spires à l'un des deux bords d'extrémités périphériques du bobinage (13) vers l'extérieur formant un épaulement extérieur (14) et les retours des spires à l'autre bord du bobinage vers l'intérieur formant un épaulement intérieur (15),
- l'on forme la culasse en enfilant des anneaux de matériau magnétique (24), dont le diamètre intérieur est approximativement égal au diamètre de la paroi cylindrique extérieure du bobinage (13), sur le bobinage rigide (23) par l'extrémité avec l'épaulement intérieur (15) jusqu'à l'obtention d'une culasse de la longueur voulu et on assemble les anneaux (24) entre eux et au bobinage (13) en les noyant dans de la résine synthétique,
- on fixe la pièce (23,24) ainsi obtenue dans la carcasse du moteur.

6. Moteur électrique comprenant un stator sans rainures fabriqué selon le procédé de la revendication 2 comprenant un bobinage cylindrique (1) dont les retours des spires à ses bords des extrémités périphériques sont rabattus vers l'extérieur dans les plans contenant l'extrémité circulaire du bobinage et perpendiculaires à l'axe du bobinage formant deux épaulements extérieurs (2,3), le bobinage (1) étant noyé dans une résine synthétique formant un ensemble rigide (11), la culasse (12) du stator étant formée d'un fil de matériau magnétique enroulé autour du bobinage, la culasse et le bobinage étant montés dans la carcasse (25) du moteur par des moyens mécaniques.

7. Moteur selon la revendication 6 fabriqué selon le procédé de la revendication 3, caractérisé par le fait que la culasse (12) est enduite avec une résine synthétique.

8. Moteur électrique comprenant un stator sans rainures fabriqué selon le procédé de la revendication 5 comprenant un bobinage cylindrique (13) dont les retours des spires au bord d'une de ses extrémités périphériques sont rabattus vers l'intérieur dans le plan contenant l'extrémité circulaire du bobinage et perpendiculaire à l'axe du bobinage formant un épaulement intérieur (15) tandis que les retours des spires au bord de sa seconde extrémité périphérique sont rabattus vers l'extérieur dans le plan contenant la seconde extrémité circulaire du bobinage et perpendiculaire à l'axe du bobinage formant un épaulement extérieur (14), le bobinage (13) étant noyé dans une résine synthétique formant un ensemble rigide (23), la culasse (24) étant formée par des anneaux en matériau magnétique enfilés sur le bobinage rigide et assemblés entre eux et au bobinage.

## Claims

1. A process for manufacturing a grooveless stator for electric motor, essentially comprising a cylindrical winding (1; 13) and a yoke (12; 24) of magnetic material surrounding the winding (1; 13), which process comprises the following steps :
- the cylindrical winding (1; 13) is formed by known means :
- the return loops of the turns situated at the edges of the peripheral ends of the winding (1; 13) are bent back thus forming shoulders (2, 3; 14, 15), at least one (2, 3; 14) of these shoulders being bent towards the outside;
- a cylindrical piece (10; 19) is placed in the center of the winding (1; 13);
- the winding (1; 13) is introduced into an appropriate mold (4; 16) and this mold is filled with molding material;
- after cooling, the cylindrical piece (10, 19) and the mold (4; 16) are removed, which step produces a rigid winding (11; 23), and around the winding there is mounted and secured the yoke (12; 24) of magnetic material, characterized in that :
a) said edges of the peripheral ends of the winding (1; 13) are bent back in the planes containing the circular ends of the winding such that shoulders (2, 3; 14, 15) are formed which are perpendicular to the axis of the winding;
b) a mold (4; 16) is used comprising a cylindrical part (5; 17) provided with at least one shoulder (6, 7; 18) which is conjugated with said external shoulder (2, 3; 14) of the winding (1; 13);
c) a cylindrical piece (10; 19) is chosen which has a diameter adapted to the internal diameter of the winding (1; 13), said cylindrical piece exerting a pressure on said winding (1; 13) to push it against the mold (4; 16);
d) a synthetic resin is used as molding material which is injected;
e) said yoke (12; 24) is mounted in the space beside said shoulder (2, 3; 14) bent back towards the outside such that its external diameter is equal to the external diameter of said shoulder;
f) the unit thus obtained is fastened in the frame (25) of the motor.

2. A process as claimed in claim 1, characterized in that
- the return loops of the turns at the edges of the two peripheral ends of the winding (1) are bent back towards the outside, thus forming two external shoulders (2, 3);
- the yoke (12) is formed by coiling around the cylindrical surface of the rigid winding (11) and between the shoulders (2, 3) a wire of magnetic material, such that it partly or completely fills the space between the two shoulders (2, 3).

3. A process as claimed in claim 2, characterized in that the unit (11, 12) thus obtained is coated with a synthetic resin.

4. A process as claimed in one of claims 2 or 3, characterized in that the wire (12) of magnetic material is coated with an insulating agent before coiling it around the winding.

5. A process as claimed in claim 1, characterized in that
- the return loops of the turns at one of the two edges of the peripheral ends of the winding (13) are bent back towards the outside, forming an external shoulder (14), and the return loops of the turns at the other edge of the winding are bent back towards the inside, forming an internal shoulder (15);
- the yoke is formed by threading rings of magnetic material (24), of which the internal diameter is approximately equal to the diameter of the cylindrical external wall of the winding (13), onto the rigid winding (23) by the end with the internal shoulder (15) until a yoke of the desired length is obtained, and the rings (24) are connected to one another and to the winding (13) by imbedding them of synthetic resin;
- the unit (23, 24) thus obtained is fastened in the frame of the motor.

6. An electric motor comprising a grooveless stator manufactured according to the process of claim 2, comprising a cylindrical winding (1) of which the return loops of the turns at its edges of the peripheral ends are bent back towards the outside in planes containing the circular end of the winding and which are perpendicular to the axis of the winding, forming two external shoulders (2, 3), the winding (1) being imbedded in a synthetic resin, forming a rigid unit (11), the stator yoke (12) being formed from a wire of magnetic material coiled around the winding, and the yoke and the winding being mounted in the frame (25) of the motor by mechanical means.

7. A motor as claimed in claim 6 and manufactured according to the process of claim 3, characterized in that the yoke (12) is coated with a synthetic resin.

8. An electric motor comprising a grooveless stator manufactured according to the process of claim 5, comprising a cylindrical winding (13) of which the return loops of the turns at the edge of one of its peripheral ends are bent back towards the inside in the plane containing the circular end of the winding and which is perpendicular to the axis of the winding, forming an internal shoulder (15), while the return loops of the turns at the edge of its other peripheral end are bent back towards the outside, in the plane containing the other circular end of the winding and which is perpendicular to the axis of the winding, forming an external shoulder (14), the winding (13) being imbedded in a synthetic resin, forming a rigid unit (23), and the yoke (24) being formed by rings of magnetic material which are threaded onto the rigid winding and connected to one another and to the winding.

## Patentansprüche

1. Verfahren zur Herstellung eines nutenlosen Ständers für einen Elektromotor, welcher im wesentlichen eine zylindrische Wicklung (1; 13) und ein Joch (12; 24) aus magnetischem Material aufweist, welches die Wicklung (1; 13) umgibt, wobei folgende Schritte durchgeführt werden :
- Es wird eine zylindrische Wicklung (1; 13) mit Hilfe bekannter Mittel geformt;
- die Umkehrschleifen der Windungen an den Rändern der Umfangsenden der Wicklung (1; 13) werden umgebogen und auf diese Weise Schultern (2, 3; 14, 15) geformt, von denen wenigstens eine (2, 3; 14) nach aussen umgebogen ist;
- ein zylindrischer Teil (10; 19) wird im Zentrum der Wicklung (1; 13) angeordnet;
- die Wicklung (1; 13) wird in eine geeignete Form (4; 16) eingeführt und diese Form mit Formmasse gefüllt;
- nach der Abkühlung werden der zylindrische Teil (10; 19) und die Form (4; 16) abgezogen, wobei eine starre Wicklung (11; 23) erhalten wird, und das Joch (12, 24) aus magnetischem Material wird um die Wicklung herum montiert und befestigt,
dadurch gekennzeichnet, dass :
a) die erwähnten Ränder der Umfangsenden der Wicklung (1; 13) in die Ebenen umgebogen werden, welche die kreisförmigen Enden der Wicklung enthalten, derart, dass senkrecht zur Wicklungsachse gerichtete Schultern (2, 13; 14, 15) gebildet werden;
b) eine Form (4; 16) mit einem zylindrischen Teil (5; 17) verwendet wird, welcher wenigstens mit einer Schulter (6, 7; 18) versehen ist, die der erwähnten äusseren Schulter (2, 3; 14) der Wicklung (1; 13) angepasst ist;
c) ein zylindrischer Teil (10; 19) mit einem Durchmesser gewählt wird, der dem Innendurchmesser der Wicklung (1; 13) angepasst ist, wobei dieser zylindrische Teil einen Druck auf die erwähnte Wicklung (1; 13) ausübt, um sie gegen die Form (4; 16) zu drücken;
d) als Formmasse ein Kunstharz benutzt wird, welches verspritzt wird;
e) das erwähnte Joch (12, 24) im Raum neben der erwähnten, nach aussen umgebogenen Schulter (2, 3; 14) montiert wird, derart, dass sein Aussendurchmesser gleich dem Aussendurchmesser der erwähnten Schulter ist;
f) das so erhaltene Bauteil im Gehäuse (25) des Motors befestigt wird.

2. Verfahren nach Anspruch 1, dadurch gekennzeichnet, dass
- die Umkehrschleifen der Windungen an den Rändern der beiden Umfangsenden der Wicklung (1) nach aussen umgebogen und auf diese Weise zwei äussere Schultern (2, 3) gebildet werden,
- das Joch (12) geformt wird, indem ein Draht aus magnetischem Material um die zylindrische Oberfläche der starren Wicklung (11) und zwischen den Schultern (2, 3) gewickelt wird, derart, dass dieser Draht teilweise oder vollständig den Raum zwischen den beiden Schultern (2, 3) ausfüllt.

3. Verfahren nach Anspruch 2, dadurch gekennzeichnet, dass das so erhaltene Bauteil (11, 12) mit einem Kunstharz überzogen wird.

4. Verfahren nach einem der Ansprüche 2 oder 3, dadurch gekennzeichnet, dass der Draht (12) aus magnetischem Material, bevor er um die Wicklung gewickelt wird, mit einer isolierenden Masse überzogen wird.

5. Verfahren nach Anspruch 1, dadurch gekennzeichnet, dass
- die Umkehrschleifen der Windungen an einem der beiden Ränder der Umfangsenden der Wicklung (13) nach aussen umgebogen werden, wobei eine äussere Schulter (14) gebildet wird, und die Umkehrschleifen der Windungen am anderen Rand der Wicklung nach innen umgebogen werden, wobei eine innere Schulter (15) gebildet wird,
- das Joch geformt wird, indem Ringe aus magnetischem Material (24), deren Innendurchmesser näherungsweise gleich dem Durchmesser der äusseren zylindrischen Wand der Wicklung (13) ist, auf die starre Wicklung (23) aufgereiht werden, und zwar über das die innere Schulter (15) aufweisende Ende, bis ein Joch gewünschter Länge erhalten wird, und dann die Ringe (24) untereinander und mit der Wicklung (13) verbunden werden, indem sie in das Kunstharz eingebettet werden,
- das so erhaltene Bauteil (23, 24) im Gehäuse des Motors befestigt wird.

6. Elektromotor mit einem nutenlosen Ständer, der nach dem Verfahren nach Anspruch 2 hergestellt ist, mit einer zylindrischen Wicklung (1), bei welcher die Umkehrschleifen der Windungen an ihren Rändern der Umfangsenden nach aussen in die das kreisförmige Ende der Wicklung enthaltenden Ebenen senkrecht zur Wicklungsachse umgebogen sind und auf diese Weise zwei äussere Schultern (2, 3) bilden, wobei die Wicklung (1) in ein Kunstharz eingebettet ist und ein starres Bauteil (11) bildet und das Joch (12) des Ständers von einem um die Wicklung gewickelten Draht aus magnetischem Material gebildet ist, und wobei das Joch und die Wicklung mit mechanischen Mitteln im Gehäuse (25) des Motors montiert sind.

7. Motor nach Anspruch 6, der nach dem Verfahren nach Anspruch 3 hergestellt ist, dadurch gekennzeichnet, dass das Joch (12) mit einem Kunstharz überzogen ist.

8. Elektromotor mit einem nutenlosen Ständer, der nach dem Verfahren nach Anspruch 3 hergestellt ist, mit einer zylindrischen Wicklung (13), bei welcher die Umkehrschleifen der Windungen am Rande einer ihrer Umfangsenden nach innen in die das kreisförmige Ende der Wicklung enthaltende Ebene senkrecht zur Wicklungsachse umgebogen sind und eine innere Schulter (15) bilden, während die Umkehrschleifen der Windungen am Rand ihres anderen Umfangsendes nach aussen in die das andere kreisförmige Ende der Wicklung enthaltende Ebene senkrecht zur Wicklungsachse umgebogen sind und eine äussere Schulter (14) bilden, wobei die Wicklung (13) in ein Kunstharz eingebettet ist und ein starres Bauteil (23) bildet, und wobei das Joch durch Ringe aus magnetischem Material gebildet ist, die auf die starre Wicklung aufgereiht und miteinander und mit der Wicklung verbunden sind.
